# EUROPEAN PATENT SPECIFICATION

(11) **EP 2 802 397 B1**
(45) Date of publication and mention of the grant of the patent: **13.03.2019**
(21) Application number: 13704489.7
(22) Date of filing: 08.01.2013
(51) Int. Cl.: B01D 35/143

(54) **DEVICE FOR TREATING WATER BY MEANS OF A REPLACEABLE FILTER CARTRIDGE**
VORRICHTUNG ZUR BEHANDLUNG VON WASSER MITTELS EINER AUSTAUSCHBAREN FILTERPATRONE
DISPOSITIF DE TRAITEMENT DE L'EAU AU MOYEN D'UNE CARTOUCHE FILTRANTE REMPLAÇABLE

(30) Priority: 09.01.2012 IT PD20120005
(43) Date of publication of application: 19.11.2014
(73) Proprietor: Laica S.p.A., 36021 Barbarano Vicentino (VI) (IT)
(72) Inventor: MORETTO, Maurizio, I-36100 Vicenza (IT)
(74) Representative: Locas, Davide
(86) International application number: PCT/IB2013/050155
(87) International publication number: WO 2013/105018

(56) References cited:
- EP-A1- 1 671 931
- WO-A2-2011/117078
- GB-A- 2 469 623
- US-A1- 2005 133 545
- US-B1- 6 224 751

## Description

The object of the invention is a device for treating water by means of a replaceable filter cartridge, of the type including a device for determining and/or signalling a spent state of the cartridge.

Removable filter cartridges subject to natural degradation, and that must therefore be replaced after a certain time interval, are used within the scope of water treatment systems, in particular those based on percolation systems.

The need to replace the cartridge is typically highlighted by a counting device that detects the number of filtering cycles carried out or the number of litres treated, or even the time that has elapsed from the moment of the first activation of the cartridge. Examples of this technology are described in international patent application WO 2009/090678.

This application describes a percolating filter jug that comprises an electronic counting device formed by a box-like housing wherein a timer and a respective control unit for counting an operating time of the useful life of the cartridge commencing from an activation thereof, so as to signal the depletion thereof.

The counting device count is then displayed by means of a display on which some graphic elements are reproduced to visually signal the time that has elapsed from the first activation and/or to visually signal the approaching expiry of the recommended operating time within which the cartridge in use is to be replaced.

In one of the embodiments described in the above-mentioned patent application, the counting device is removably inserted into a special seat produced on the lid of the jug in such a way that it may be extracted from the seat for maintenance purposes such as battery replacement.

The counting device is typically locked within the seat by means of a form fit, for example envisaging a certain degree of interference between the size of the device housing and the seat, or by using a tongue that slots into a respective recess.

It is evident that these solutions demand a certain manufacturing complexity, having to envisage somewhat precise dimensional tolerances.

Alternatively, flexible clips are used, such as for example in the solution described in GB 2469623, which, as well as being susceptible to breakage, are not pleasing from an aesthetic point of view.

In addition, in all the known solutions for removing the counting device from the seat, it is necessary to force the interlocking or the clip and, for this to happen, the action of a finger is not always sufficient, it being in fact necessary to use a tool tool to remove the device.

A further alternative is described in patent application WO 2011/117078, which provides for the use of a connection of the type commonly known as a "push-push" connection between the counting device and the jug lid.

Although this solution certainly allows a simple and rapid removal of the counting device, it has proved to be relatively complicated from the point of view of construction. In addition, in the event of the push-push connection being of inadequate quality, it can be fairly easily subject to breakage.

The technical problem at the basis of the present invention is therefore that of making available a water treatment device that is structurally and functionally designed to overcome all the drawbacks reported with reference to the aforementioned prior art.

This problem is resolved by means of a water treatment device formed in accordance with the below claims.

In the context of this problem, the invention provides the possibility of easily removing, and without the use of tools, a device for determining and/or signalling a spent state of a cartridge from a water treatment device, with a construction solution that is easy and economical to manufacture and completely innocuous from an aesthetic point of view.

In addition, the device according to the present invention is not subject to significant risks of breakage, in particular during the removal of the determining and/or signalling means of a spent state of the cartridge.

The characteristics and further advantages of the invention will become clearer from the detailed description that follows of a preferred but non-exclusive embodiment thereof, illustrated by way of a non-limiting example, with reference to the accompanying drawings, wherein:
- figures 1 and 1A are a cross-sectional side view and a respective detail of a water treating device according to the present invention;
- figure 2 is an exploded side view of the detail of the device of figure 1A;
- figure 3 is a partial perspective top view of the device of figure 1;
- figure 4 is a partial perspective top view of the device of figure 3;
- figure 5 is a cross-sectional side view of a lid of a water treatment device according to a different embodiment of the present invention; and
- figure 6 is a cross-sectional side view of a hopper and of a lid of a water treatment device according to a further embodiment of the present invention.

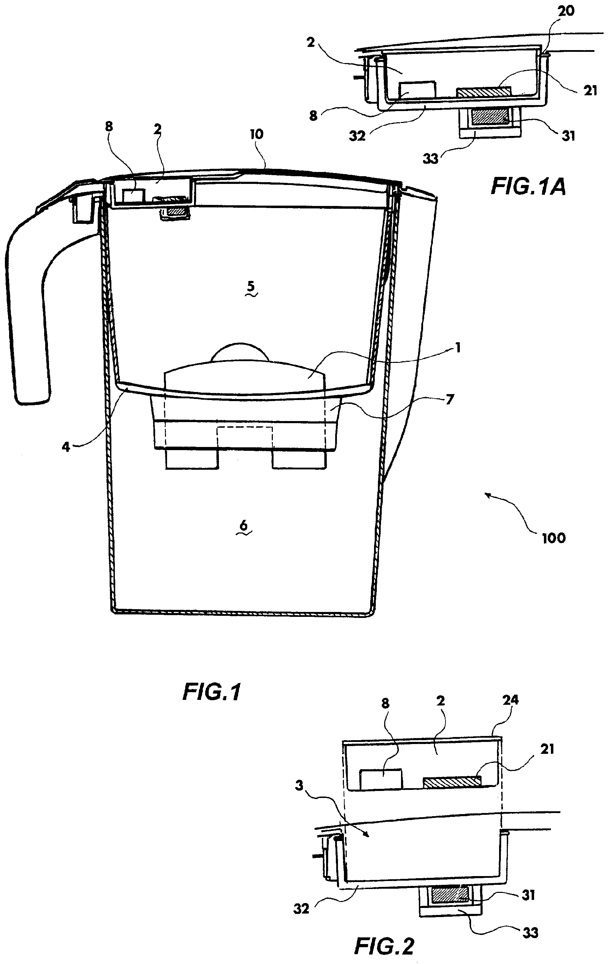

With initial reference to figure 1, a portable water treatment device is indicated as a whole by reference number 100. It should be noted that in the present context, the term portable indicates that is can be easily carried by a person by hand. In particular, reference will be made to a device 100 of the jug type, the mouth of which is removably closed by a lid 10. The invention is also applicable to different systems such as for example kettles, coffee makers, in-line filters and the like.

The jug is fitted inside a hopper 4, which defines a first collecting basin 5 for the water to be filtered that communicates with a second collecting basin 6 for the water filtered through a duct 7. A filter cartridge 1, for example of the type comprising a mixture of materials intended for treating drinking water by means of percolation and, once again by way of example, selected from active carbons, salts, ion exchange resins and the like, is removably housed in the duct 7.

As is known, these filter cartridges 1 are subject to a decline on the basis of the amount of water treated or of time elapsing its first activation and, in order to allow the user to replace the cartridge when spent, the device according to the present invention comprises a determining and signalling device 2 of a spent state of the filter cartridge 1.

In their simplest form, this determining and signalling device 2 comprises an electronic circuit provided with a timer, not illustrated in the drawing, and emit an acoustic or visual signal, to indicate to the user that a period of time corresponding to the maximum useful life of the cartridge 1 has elapse from the first use thereof. Clearly, if determination of a spent cartridge is based on counting the jug filling cycles or the amount of water filtered, signalling will take place once the maximum number of cycles or litres envisaged for the specific type of cartridge used has been reached. It is indeed evident, that other means or devices for determining and signalling a spent state, based on the very count of the amount of water treated or of the cycles performed, or even on a combination of the amount and time since the first activation.

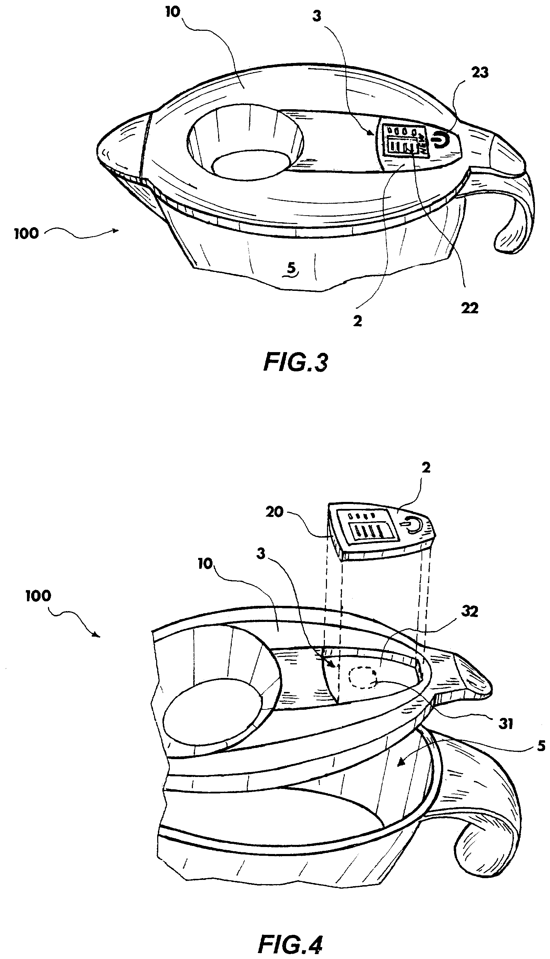

With reference to figures 3 and 4, the determining and signalling device 2 is preferably incorporated in a box-shaped casing 20 made of plastic material and uses a display 22, for example of the LCD variety, that is functionally connected to the electronic circuit for the display of the visual signal of a spent state of the filter cartridge 1. Once again by way of example, the display 22 can use a bar graph to indicate a spent state of the filter cartridge 1.

Additionally, the determining and signalling device 2 comprises a power button 23, for example intended to activate the timer at the moment of the first use of the filter cartridge 1.

Furthermore, only a portion of this device 2 may be removable, for example, it may envisage signalling means that are separate from the means used to determine a spent state, by simply using a display housed in a container that is separate from the electronic circuit, which are connected when one or other means are housed in the respective seat.

Again with reference to figures 1 and 2, according to one preferred embodiment the removal of the determining and signalling device 2 allows access to a housing compartment for a battery 8 that provides the electrical power necessary for operation of the display and the circuit.

It will thus be possible, on removal of the determining and signalling device 2, to replace the battery 8 once spent.

As can be seen from figure 1A, the housing 20 is housed within the seat 3 envisaging a certain clearance, which allows the easy placement of the determining and signalling means and the signalling 2 therein.

In order to hold the determining and signalling device 2 in the seat 3, the device according to the present invention comprises a pair of magnetic elements 21, 31 that are respectively affixed onto the determining and signalling device 2 and on the lid 10 of the device.

It should be noted that in the present context, the term pair of magnetic elements means two elements subject to a magnetic attraction force in that they are situated sufficiently close to one another.

In the present embodiment, the magnetic element 21 of the determining and signalling device 2 is formed by a body made of ferrous or similar material arranged within the housing 20, while the magnetic element 31 of the seat 3 is produced by means of a permanent magnet located on the opposite side of the determining and signalling device 2 with respect to a wall 32 that defines the seat 3 itself. It is clear that different constructive solutions may be envisaged, wherein the permanent magnet is associated with the device 2 and the body made of ferrous material is associated with the seat 3, or even wherein both elements are permanent magnets arranged in such a way that, when the device 2 is inserted into the seat the respective poles face in such a way as to obtain an attractive force.

The magnetic element 21 of the device 2 can also be formed by parts that are subject to magnetic attraction of the electronic circuit, of the display, battery or even of the connection elements of these components.

In any case, more generally, the magnetic elements 21, 31 are constructed and arranged in such a way that, when the determining and signalling device 2 is placed within the seat 3, the force of magnetic attraction of the magnetic elements 21, 31 is sufficient to hold the device 2 within the seat 3, at least during normal use of the jug.

At the same time, this magnetic force of attraction can be overcome, thus releasing the determining and signalling device 2 from the seat 3, when the jug 100 is subjected to at least a predetermined external stress, such as that obtained by turning the jug upside down and tapping the base 101 of the jug 100 opposite the lid 10 with one's hand or by removing the latter and shaking vigorously. Clearly, in the event of the use of a removable lid 10, the coupling constraint between the latter and the mouth of the jug 100 must have a greater force than that exerted between the two magnetic elements.

In order to improve the positioning of the housing 20 of the determining and signalling device 2, the latter may be provided with a projecting frame 24 that rests on a peripheral edge of the seat 3.

Furthermore, the magnetic element 31 is placed in a suitable seat 33 secured to the wall 32 that entirely surrounds it, so as to prevent the accidental removal thereof.

Iteration with the magnetic element 31 on seat 3 can also be advantageously used in order to provide an enable signal to the determining and signalling device of a spent state of the filter cartridge.

Thus, in the absence of this enable signal and, in other words, when the means 2 are not housed in the relevant seat 3, the switching of the display and/or the beginning of the count by the timer can be prevented, thus preventing unnecessary battery consumption when the determining and signalling device 2 is not used in a jug.

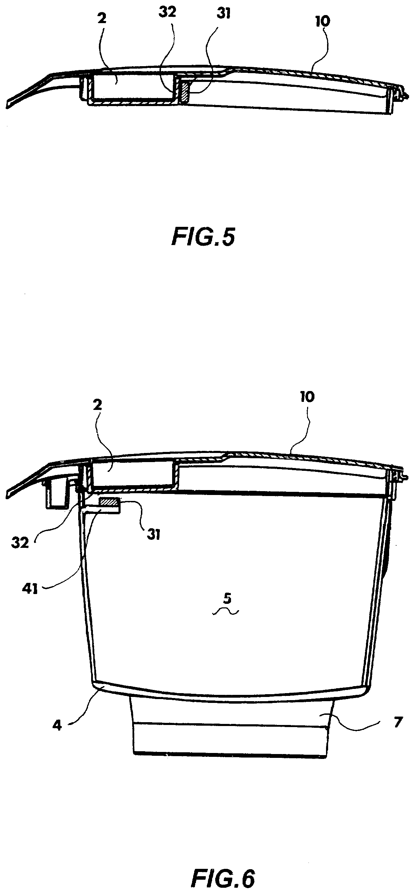

Figures 5 and 6 also describe two alternative embodiments of the present invention.

The embodiment solution of figure 5 differs from the previous solution in that the magnetic element of the seat is affixed to a wall 32' that defines one side of the seat 3.

The magnetic element for the determining and signalling device 2 can also be arranged in a corresponding position.

In the embodiment of figure 6, the magnetic element 31 is affixed to a projection 41 produced on a wall of the hopper 4, which defines the basin 5 in proximity to the lid 10.

It should also be noted that in this event, the magnetic element 31 faces the determining and signalling means 2 from the opposite direction with respect to the wall 32.

However, in this case, removal of the lid 10 will result in a distancing of the pair of magnetic elements 21, 31, thus in fact allowing the release of the determining and signalling device 2 from seat 3.

The invention thus resolves the proposed problem, while at the same time achieving a plurality of advantages. The determining and signalling device 2 may be held in the seat 3 without requiring connections with precise machining and can be removed therefrom without forcing any interlocking seat.

In addition, the possibility of removing the determining and signalling means allows the relative battery compartment to be easily reached and the battery to be replaced.

Furthermore, the use of a simple magnetic connection allows for jug to be packaged without the determining and signalling device 2 being inserted in the relevant seat, leaving this operation to the user, once the use of this product is underway. Thus, thanks to the enabling function of the determining and signalling means associated with the magnetic connection, the distribution of the determining and signalling device with with batteries already in part or fully spent due to the random activation thereof, can be avoided.

Lastly, the fact that the magnetic element of the seat is arranged on an opposite side from the determining and signalling device allows a particularly effective housing of the magnetic element on the lid, while protecting it from any breakages or accidental detachments that could occur if it is were glued in a special seat.

## Claims

1. A device (100) for treating water by means of a replaceable filter cartridge (1) comprising a device (2) for determining and/or signalling a spent state of the filter cartridge (1), said determination and/or signalling device (2) being removably housed in a housing seat (3), **characterized in that** the determination and/or signalling device (2) and the housing seat (3) are provided with respective magnetic members (21, 31), said members (21, 31) being subject to a force of magnetic attraction with respect to one another, the magnetic member (31) of the seat (3) being arranged at a part opposite to the determination and/or signalling device (2) with respect to a wall (32, 32') which defines the seat (3) and the distance between the magnetic members (21, 31) when the determination and/or signalling device (2) are located within the seat (3) being such as to generate a force of magnetic attraction sufficient to hold the determination and/or signalling device (2) within the seat (3) and such that said determination and/or signalling device (2) is released from the seat (3) when the device (100) is subjected to a predetermined external force.

2. A device (100) according to claim 1, wherein said determination and/or signalling device (2) comprises an electronic circuit for determining and/or displaying a spent state of the filter cartridge (1), said circuit being activated as a result of said iteration between the magnetic members (21, 31).

3. A device (100) according to one of the preceding claims, wherein the seat (3) is provided at a removable cover (10) which can be inserted at an inlet mouth of the device (100).

4. A device (100) according to claim 3, wherein the magnetic member (31) of the seat (3) is affixed to the wall (32, 32').

5. A device (100) according to claim 3, wherein the magnetic member (31) of the seat (3) is affixed to a projection (41) structurally independent from the cover (10) and arranged in proximity to the wall (32, 32').

6. A device (100) according to one of the preceding claims, wherein said device (2) for determining and/or signalling a spent state comprise a compartment for the removable housing of a battery (8), said compartment being reachable following the removal of the determination and/or signalling device (2) from the seat (3).

7. A device (100) according to one of the preceding claims, wherein said determination and/or signalling device (2) of the spent state comprises a box-shaped casing (20) that houses the magnetic member (21).

8. A device (100) according to one of the preceding claims, comprising a jug container internally provided with a hopper (4) which defines a first collecting basin (5) for the water to be filtered, said first basin (5) communicating with a second collecting basin (6) for the water filtered through a duct (7), wherein said filter cartridge (1) is removably housed.

9. A device (100) according to claims 5 and 8, wherein said projection (41) is affixed to a wall of the hopper (4) which defines the first collecting basin (5).

## Patentansprüche

1. Vorrichtung (100) zur Aufbereitung von Wasser mittels einer auswechselbaren Filterkartusche (1) mit einer Vorrichtung (2) zum Bestimmen und/oder Signalisieren eines verbrauchten Zustands der Filterkartusche (1), wobei eine Bestimmungs- und/oder Signalvorrichtung (2) abnehmbar in einem Gehäusesitz (3) aufgenommen ist, **dadurch gekennzeichnet, dass** die Bestimmungs- und/oder Signalvorrichtung (2) und der Gehäusesitz (3) mit jeweiligen magnetischen Elementen (21, 31) versehen sind, wobei die Elemente (21) 31) miteinander einer magnetischen Anziehungskraft ausgesetzt sind, wobei das magnetische Element (31) des Sitzes (3) an einem Teil angeordnet ist, das der Bestimmungs- und/oder Signalvorrichtung (2) bezüglich einer Wand (32, 32 ') gegenüberliegt, die den Sitz (3) und den Abstand zwischen den magnetischen Elementen (21, 31) bildet, wenn die Bestimmungs- und/oder Signalvorrichtung (2) innerhalb des Sitzes (3) so angeordnet ist, um eine magnetische Anziehungskraft zu erzeugen, die ausreichend ist, um die Bestimmungs- und/oder Signalvorrichtung (2) innerhalb des Sitzes (3) zu halten, und dadurch, dass die Bestimmungs- und/oder Signalvorrichtung (2) vom Sitz (3) freigegeben wird, wenn die Vorrichtung (100) einer vorbestimmten äußeren Kraft ausgesetzt wird.

2. Vorrichtung (100) nach Anspruch 1, wobei die Bestimmungs- und/oder Signalvorrichtung (2) eine elektronische Schaltung zum Bestimmen und/oder Anzeigen eines verbrauchten Zustands der Filterkartusche (1) aufweist, wobei die Schaltung als Ergebnis der Iteration zwischen den magnetischen Elementen (21, 31) aktiviert wird.

3. Vorrichtung (100) nach einem der vorhergehenden Ansprüche, wobei der Sitz (3) an einer abnehmbaren Abdeckung (10) vorgesehen ist, die an einer Einlassöffnung der Vorrichtung (100) eingesetzt werden kann.

4. Vorrichtung (100) nach Anspruch 3, wobei das magnetische Element (31) des Sitzes (3) an der Wand (32, 32') befestigt ist.

5. Vorrichtung (100) nach Anspruch 3, wobei das magnetische Element (31) des Sitzes (3) an einem Vorsprung (41) befestigt ist, der von der Abdeckung (10) strukturell unabhängig ist und in der Nähe der Wand (32, 32 ') angeordnet ist.

6. Vorrichtung (100) nach einem der vorhergehenden Ansprüche, wobei die Vorrichtung (2) zum Bestimmen und/oder Signalisieren eines verbrauchten Zustands ein Fach für das abnehmbare Gehäuse einer Batterie (8) aufweist, wobei das Fach nach dem Entfernen der Bestimmungs- und/oder Signaleinrichtung (2) vom Sitz (3) erreichbar ist.

7. Vorrichtung (100) nach einem der vorhergehenden Ansprüche, wobei die Bestimmungs- und/oder Signalvorrichtung (2) des verbrauchten Zustands ein kastenförmiges Gehäuse (20) umfasst, das das magnetische Element (21) aufnimmt.

8. Vorrichtung (100) nach einem der vorhergehenden Ansprüche mit einer Karaffe, die intern mit einem Trichter (4) versehen ist, der ein erstes Auffangbecken (5) für das zu filternde Wasser bildet, wobei das erste Becken (5) mit einem zweiten Sammelbecken (6) für das Wasser kommuniziert, das durch einen Kanal (7) gefiltert wird, wobei die Filterkartusche (1) abnehmbar aufgenommen ist.

9. Vorrichtung (100) nach den Ansprüchen 5 und 8, wobei der Vorsprung (41) an einer Wand des Trichters (4) befestigt ist, der das erste Auffangbecken (5) bildet.

## Revendications

1. Dispositif (100) de traitement de l'eau au moyen d'une cartouche filtrante remplaçable (1) comprenant un dispositif (2) pour déterminer et/ou signaler un état épuisé de la cartouche filtrante (1), ledit dispositif de détermination et/ou de signalisation (2) étant logé de façon amovible dans une assise de logement (3), **caractérisé en ce que** le dispositif de détermination et/ou de signalisation (2) et l'assise de logement (3) sont dotés d'éléments magnétiques respectifs (21, 31), lesdits éléments (21, 31) étant soumis à une force d'attraction magnétique l'un par rapport à l'autre, l'élément magnétique (31) de l'assise (3) étant agencé au niveau d'une partie opposée au dispositif de détermination et/ou de signalisation (2) par rapport à une paroi (32, 32') qui définit l'assise (3) et la distance entre les éléments magnétiques (21, 31) lorsque le dispositif de détermination et/ou de signalisation (2) est situé à l'intérieur de l'assise (3) étant telle qu'elle permet de générer une force d'attraction magnétique suffisante pour maintenir le dispositif de détermination et/ou de signalisation (2) à l'intérieur de l'assise (3) et telle que ledit dispositif de détermination et/ou de signalisation (2) est libéré de l'assise (3) lorsque le dispositif (100) est soumis à une force externe prédéterminée.

2. Dispositif (100) selon la revendication 1, dans lequel ledit dispositif de détermination et/ou de signalisation (2) comprend un circuit électronique pour déterminer et/ou afficher un état épuisé de la cartouche filtrante (1), ledit circuit étant activé suite à ladite itération entre les éléments magnétiques (21, 31).

3. Dispositif (100) selon l'une des revendications précédentes, dans lequel l'assise (3) est prévue au niveau d'un couvercle amovible (10) qui peut être inséré au niveau d'une bouche d'entrée du dispositif (100).

4. Dispositif (100) selon la revendication 3, dans lequel l'élément magnétique (31) de l'assise (3) est fixé à la paroi (32, 32').

5. Dispositif (100) selon la revendication 3, dans lequel l'élément magnétique (31) de l'assise (3) est fixé à une saillie (41) structurellement indépendante du couvercle (10) et agencée à proximité de la paroi (32, 32').

6. Dispositif (100) selon l'une des revendications précédentes, dans lequel ledit dispositif (2) pour déterminer et/ou signaler un état épuisé comprend un compartiment pour le logement amovible d'une batterie (8), ledit compartiment étant accessible après le retrait du dispositif de détermination et/ou de signalisation (2) de l'assise (3).

7. Dispositif (100) selon l'une des revendications précédentes, dans lequel ledit dispositif de détermination et/ou de signalisation (2) de l'état épuisé comprend un boîtier en forme de boîte (20) qui loge l'élément magnétique (21).

8. Dispositif (100) selon l'une des revendications précédentes, comprenant un récipient carafe doté à l'intérieur d'une trémie (4) qui définit un premier bassin collecteur (5) pour l'eau devant être filtrée, ledit premier bassin (5) communiquant avec un second bassin collecteur (6) pour l'eau filtrée à travers un conduit (7), dans lequel ladite cartouche filtrante (1) est logée de façon amovible.

9. Dispositif (100) selon les revendications 5 et 8, dans lequel ladite saillie (41) est fixée à une paroi de la trémie (4) qui définit le premier bassin collecteur (5).
